Europäisches Patentamt

European Patent Office

Office européen des brevets

(19)

(11) Numéro de publication: **0 157 689**
**A1**

# (12) DEMANDE DE BREVET EUROPEEN

(21) Numéro de dépôt: 85400519.6

(22) Date de dépôt: 19.03.85

(51) Int. Cl.⁴: **G 05 F 1/20, H 02 M 5/10**

(30) Priorité: **19.03.84 FR 8404210**

(43) Date de publication de la demande: **09.10.85**
**Bulletin 85/41**

(84) Etats contractants désignés: **BE CH DE FR GB IT LI LU NL SE**

(71) Demandeur: **Ets. AUGIER S.A., Z.I. Carros 2è Casier - Ilot J B.P. 26, F-06511 Carros Cédex (FR)**

(72) Inventeur: **Nicolas, Jean-Pierre, 88, boulevard Mantega-Righi, F-06100 Nice (FR)**

(74) Mandataire: **Plaçais, Jean-Yves et al, Cabinet Netter 40, rue Vignon, F-75009 Paris (FR)**

(54) **Générateur de tension alternative variable.**

(57) Un enroulement de base (EB) est relié au secteur alternatif. Un inverseur associé (10) est branché entre le point milieu (P3) et l'une des bornes extrêmes (P1 et P2) de l'enroulement de base. Un premier enroulement additionnel (E1), branché entre le point milieu (P3) et la sortie (SO) de l'inverseur (10), possède un premier inverseur additionnel (11) branché entre ses bornes extrêmes. Sa sortie est prise entre le point milieu P13 de l'enroulement E1 et le point commun de l'inverseur I1. Deux autres enroulements E2, E3 sont montés de la même manière. Le dernier inverseur additionnel (13) est de préférence branché entre des points (P34 et P36) situés au quart et aux trois quarts de l'enroulement (E3). La charge (L) est branchée entre le commun de l'inverseur (13) et l'une des bornes (P2) de l'enroulement de base (EB).

0157689

1

Générateur de tension alternative variable.

L'invention concerne un dispositif générateur de tension alternative variable.

En de nombreuses applications, il est nécessaire d'effectuer un ajustement précis d'une tension alternative par rapport à une valeur désirée, en fonction notamment des fluctuations que peut présenter l'alimentation secteur ou la demande de la charge; un dispositif capable d'une telle fonction est appelé ici générateur de tension alternative variable. Le besoin existe de tels générateurs qui soient à la fois simples, souples, capables d'une réponse rapide, en même temps qu'économiques.

La présente invention vient apporter une solution avantageuse à ce problème.

Le dispositif proposé est du type comprenant un enroulement de base, auto-transformateur, qui reçoit une tension alternative d'entrée, et dont le circuit de sortie, associé à des moyens de commande, fournit à une charge une tension d'alimentation réglable.

Selon un premier aspect de l'invention, le circuit de sortie est relié, d'une part, à un point intermédiaire de l'enroulement de base et, d'autre part, par un premier organe inver-

seur, à l'une ou l'autre des bornes extrêmes de l'enroulement de base; de leurs côtés, les moyens de commande sont agencés pour fournir un signal numérique binaire de commande à cet organe inverseur, ladite commande étant exécutée à l'inversion du courant traversant l'organe inverseur.

Selon un autre aspect de l'invention, le circuit de sortie comporte un premier enroulement additionnel, branché d'une part au point intermédiaire de l'enroulement de base et d'autre part, par ledit organe inverseur, à l'une ou l'autre des bornes extrêmes de l'enroulement de base; il comporte aussi un premier organe inverseur additionnel, branché sur une partie au moins du premier enroulement additionnel, la sortie de ce premier organe inverseur additionnel allant vers la charge.

De préférence, le circuit de sortie comporte un ou plusieurs autres enroulements additionnels, branchés chacun d'une part en un point intermédiaire de l'enroulement précédent et, d'autre part, par l'organe inverseur de celui-ci, à l'une ou l'autre des bornes extrêmes de l'enroulement précédent; chaque enroulement additionnel est associé à au moins un inverseur additionnel correspondant, et la sortie du dernier de ces inverseurs additionnels va vers la charge.

Dans un mode de réalisation avantageux, le dispositif comprend au moins deux autres enroulements additionnels de ce genre.

Selon une première caractéristique particulière de l'invention, chaque organe inverseur comprend deux triacs ou deux paires de thyristors.

Selon un autre mode de réalisation, utilisable dans certains cas, chaque organe inverseur comprend un inverseur mécanique à commande par signal codé.

3

0157689

De leur côté, les moyens de commande comprennent des moyens
pour comparer à une tension de consigne la tension mesurée à
chaque instant aux bornes de la charge, et des moyens pour
élaborer et mémoriser un signal binaire fonction de cette
comparaison, afin de l'appliquer aux organes inverseurs
dans l'ordre des poids binaires associés.

Selon un autre aspect encore de l'invention, le signal binaire est appliqué dans un code, tel que le code Gray, où un
seul bit change à chaque incrémentation/décrémentation.

D'autres caractéristiques et avantages de l'invention apparaîtront à l'examen de la description détaillée ci-après,
et des dessins annexés, sur lesquels :

- la figure 1 est le schéma électrique général d'un premier
mode de réalisation de l'invention;

- la figure 2 est le schéma général d'une variante de réalisation de l'invention;

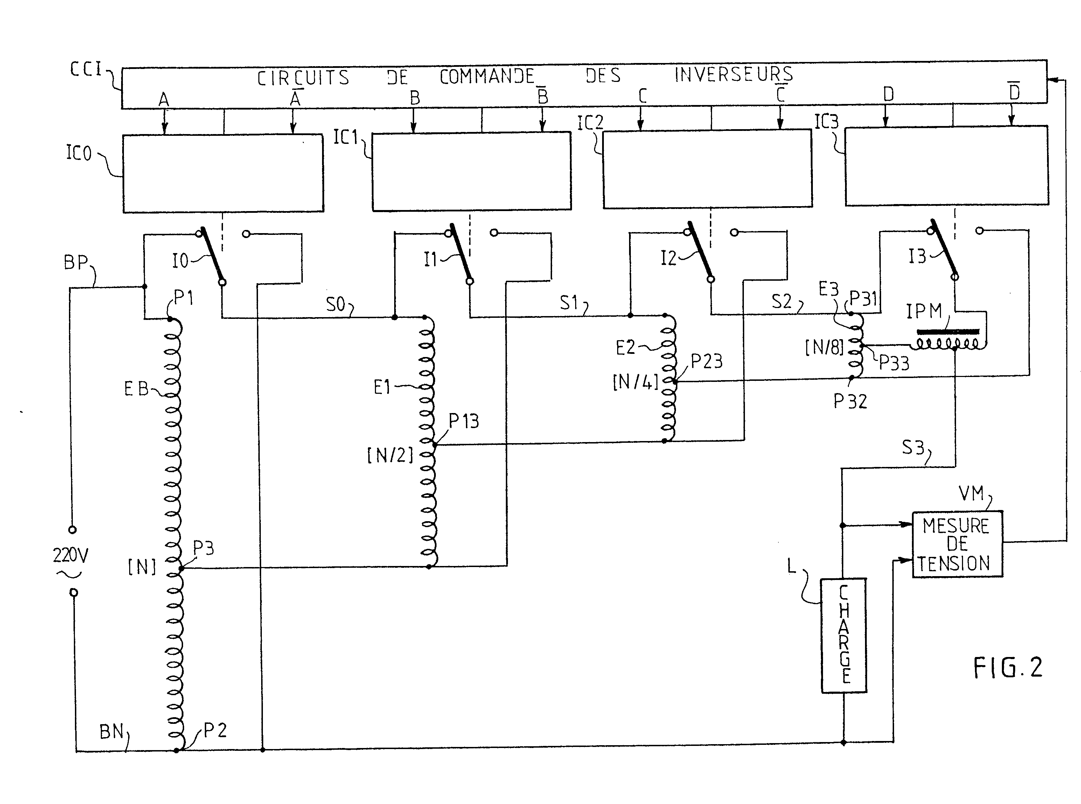

- la figure 3 est le schéma électrique détaillé du circuit
de commande des inverseurs utilisé dans la figure 1 ou dans
la figure 2;

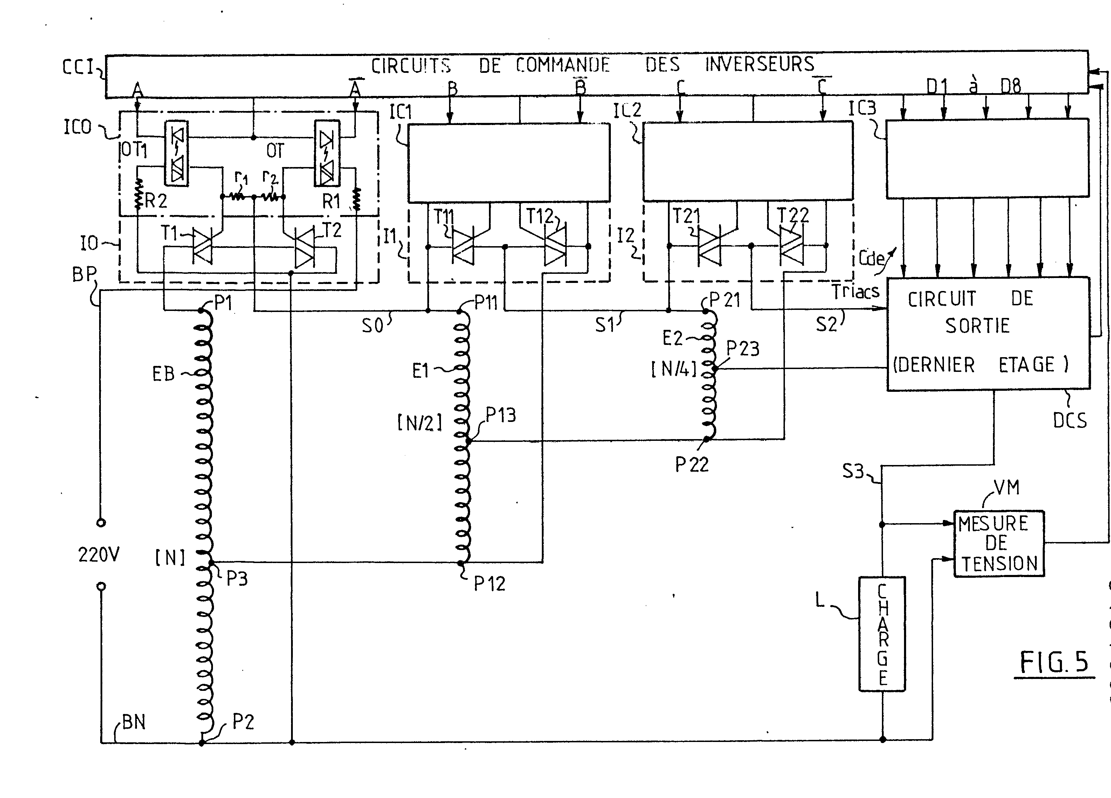

- la figure 4 est un diagramme montrant le passage du code
binaire pur au code Gray, avec les incréments correspondants;
et

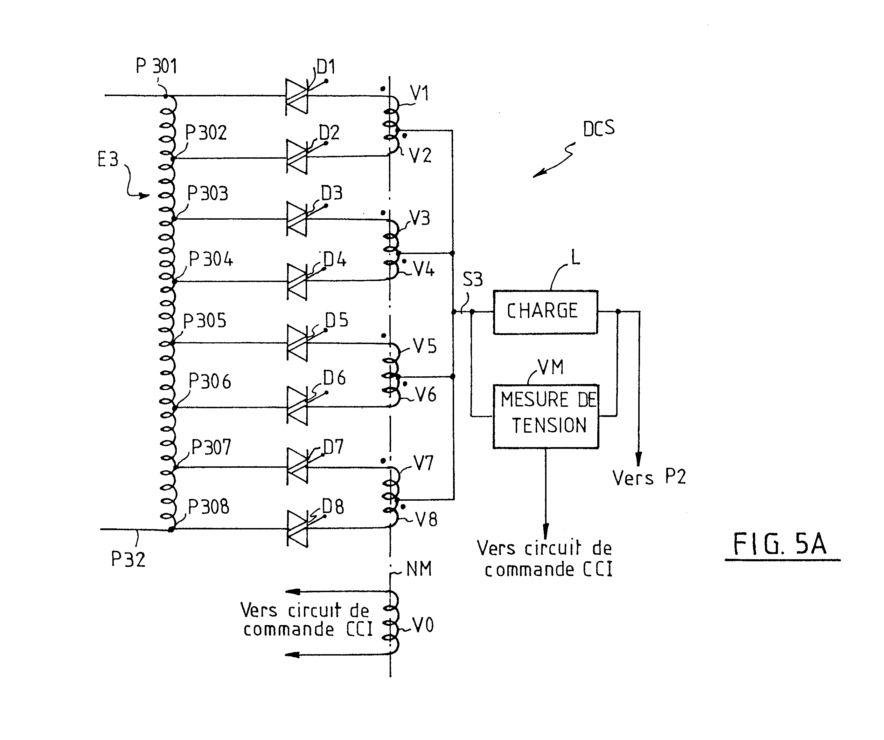

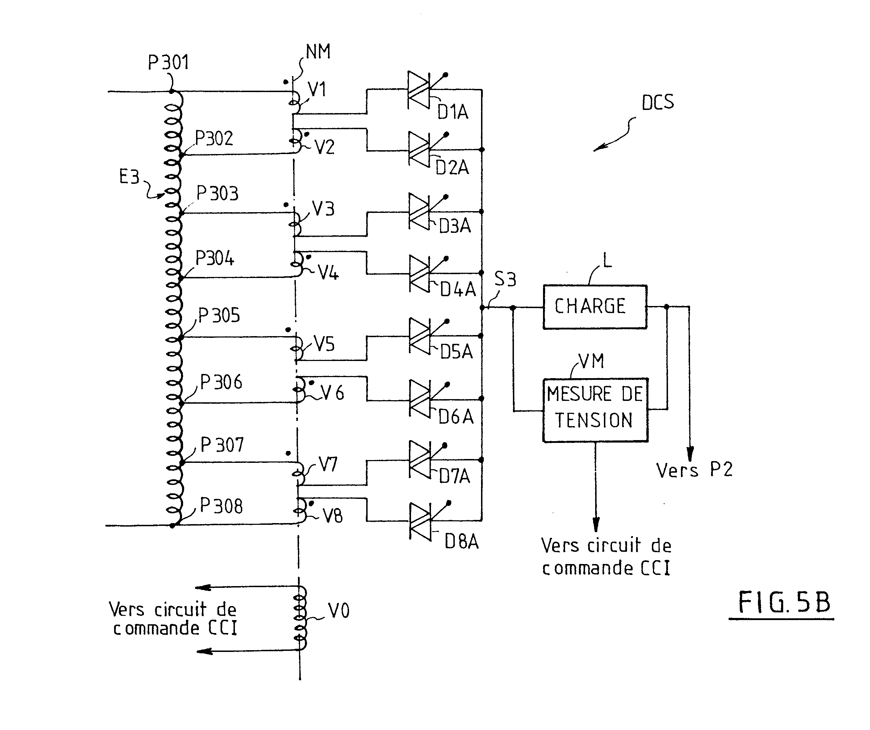

- la figure 5 illustre une autre variante de l'invention,
détaillée en deux réalisations sur les figures 5A et 5B.

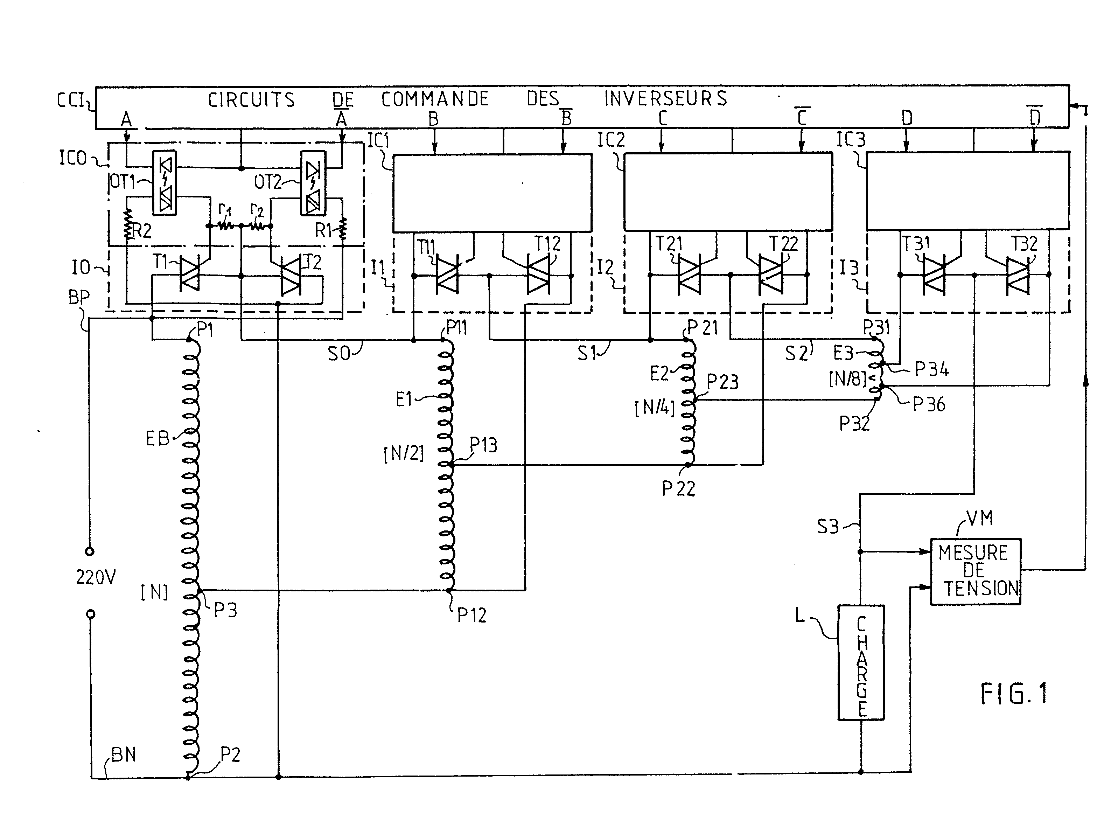

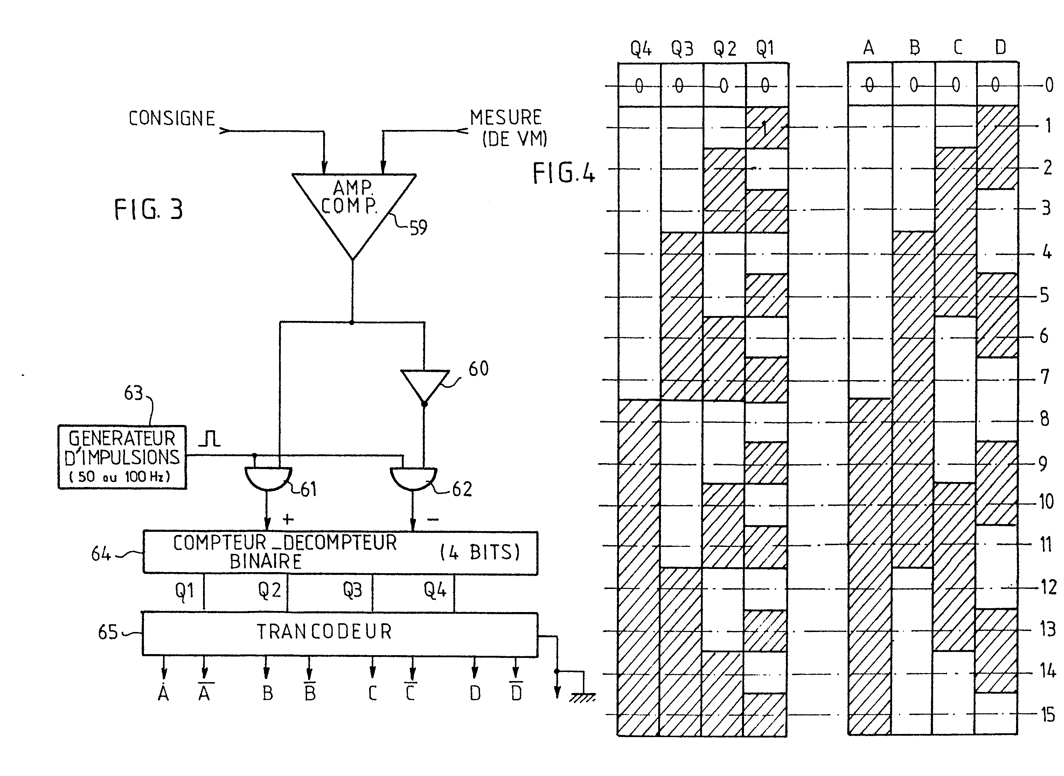

On décrira maintenant le mode de réalisation préférentiel de
l'invention, en référence à la figure 1.

La tension d'alimentation secteur à 220 volts alternatif est
présente entre deux bornes BP et BN, dont l'une correspond par exemple à la phase et l'autre au neutre. Un enroulement de base EB, formant auto-transformateur (circuits
magnétiques non représentés), possède des bornes extrêmes
P1 et P2 respectivement connectées aux bornes d'entrée
BP et BN. L'enroulement de base EB possède également un point milieu P3. La tension nominale de service de cet enroulement de base est notée U. Cet enroulement peut être complété de fil fin, par exemple entre BN et le neutre. La tension U est alors différente de 220 volts.

Un organe inverseur IO est associé à l'enroulement de base EB. Dans ce mode de réalisation, l'organe inverseur 10 comporte deux triacs T1 et T2 montés tête-bêche, en série, leurs deux gâchettes se faisant face. La borne libre du triac T1 est connectée au point P1, tandis que celle du triac T2 est connectée au point P2.

L'inverseur commandé IO est placé sous le contrôle d'un circuit de commande ICO. Bien que d'autres modes de réalisation soient possibles, celui-ci comporte de préférence une disposition qui est également caractéristique de l'invention.

Dans ce cas, le circuit ICO possède une résistance $r_1$ branchée entre la gâchette du triac T1 et son point commun avec le triac T2. Symétriquement, une résistance $r_2$ est branchée entre la gâchette du triac T2 et son point commun avec le triac T1. Des coupleurs opto-électroniques du type opto-triac sont respectivement associés aux deux triacs T1 et T2. L'opto-triac OT1 possède dans sa partie menée un triac branché entre la gâchette du triac T1 et une résistance R2 reliée au point P2 ainsi qu'à la borne extrême du triac T2. Symétriquement, l'opto-triac OT2 possède dans sa partie menée un triac branché entre la gâchette du triac T2 et une résistance R1 qui va vers le point P1 et la borne libre du triac T1. Une disposition analogue est possible avec des triacs dont les gâchettes seraient dos à dos.

Les parties menantes des opto-triacs OT1 et OT2 reçoivent, par rapport à une ligne de référence ou masse, des signaux logiques de commande dont les polarités sont opposées, qui sont notés A et $\overline{A}$, respectivement.

Cette disposition procure intrinsèquement l'exclusion mutuelle

entre les deux triacs ; en effet, par un choix convenable des éléments, on peut faire en sorte que un et un seul des triacs T1 et T2 soit conducteur à un instant donné.

Il est remarquable que cet avantage demeure, même si les tensions qui se trouvent respectivement aux bornes des deux triacs sont de fréquence et/ou d'amplitude différentes. On garde aussi l'avantage d'une commande numérique programmable à travers les opto-triacs.

En variante, les opto-triacs peuvent être remplacés par des courts-circuits tandis que des interrupteurs commandés en opposition court-circuitent l'une ou l'autre des gâchettes (OU exclusif).

L'homme de l'art comprendra que les triacs T1 et T2 peuvent être remplacés par des paires de thyristors, en conservant les avantages de l'invention.

Le circuit de sortie commence donc au point commun entre les triacs T1 et T2, sur une ligne notée SO.

Dans une version très simplifiée du dispositif, la charge L pourrait être connectée directement entre le point SO et le point P3. On réalise ainsi un inverseur électronique asservi.

Il est cependant préféré actuellement que le circuit de sortie comporte d'autres enroulements, comme on le décrira ci-après.

Sur la figure 1, les circuits de sortie comportent, entre le point SO et le point P3, un premier enroulement additionnel E1, de tension nominale U/2, entre deux bornes extrêmes P11 et P12. Le point milieu de cet enroulement E1 est noté P13.

Un inverseur commandé I1 à triacs T11 et T12 est branché comme précédemment décrit entre les points P11 et P12. Le circuit de commande IC1 de cet inverseur peut être le même que celui illustré en ICO sur la figure 1, ou bien d'un type différent. Il reçoit par rapport à une ligne de référence des signaux logiques de commande B et $\overline{B}$ depuis les circuits de commande des inverseurs notés CCI. Le circuit de sortie se prolonge alors entre les points S1 et P13. Là encore, la charge pourrait être branchée entre ces points.

Le mode de réalisation décrit fait cependant apparaître un second enroulement additionnel E2, de tension nominale U/4, entre les points extrêmes P21 et P22, avec un point milieu P23. Un second inverseur commandé additionnel I2 possède des triacs T21 et T22 branchés comme précédemment. Il lui est associé un circuit de commande IC2, qui peut être le même que le circuit IC1. Le circuit IC2 reçoit des signaux logiques C et $\overline{C}$, ainsi qu'une ligne de référence de l'organe CCI.

La sortie est maintenant définie entre les points S2 et P23. La charge pourrait lui être connectée.

Dans le mode de réalisation décrit, il est encore prévu un troisième enroulement additionnel E3, de tension nominale U/8, entre des points extrêmes P31 et P32. Un troisième inverseur commandé additionnel I3, à deux triacs T31 et T32, ainsi que son circuit de commande IC3 sont encore prévus. Le circuit de commande IC3 reçoit des signaux logiques D et $\overline{D}$ de l'organe CCI.

Au lieu d'être branché entre les points extrêmes P31 et P32 du dernier enroulement additionnel E3, le circuit inverseur commandé I3 est, de préférence, branché entre des points P34 et P36 qui sont respectivement situés au quart et aux trois quarts (en tension) du dernier enroulement additionnel E3.

La charge L reçoit alors la tension présente entre le point commun S3 aux deux triacs T31 et T32 et la ligne P2.

Enfin, un circuit VM mesure la tension (ou une autre caractéristique électrique) aux bornes de la charge L, et délivre
l'information obtenue au circuit de commande CCI. La mesure
de tension se fait avantageusement par échantillon, de manière à connaître la tension aux bornes de la charge L à des
instants suffisamment rapprochés par rapport à la périodicité de la commande des différents interrupteurs commandés à
triacs.

La figure 2 montre une variante de réalisation du dispositif
de la figure 1. Les inverseurs commandés I0, I1, I2 et I3
sont maintenant réalisés sous forme mécanique, un contact
étant actionné par un élément de commande respectif IC0, IC1,
IC2 et IC3, (par exemple cames de commande d'un commutateur,
rotatif ou non). Ces derniers éléments de commande sont,
comme précédemment, sous le contrôle d'une centrale de commande CCI des éléments de commande IC0 à IC3. La centrale
CCI peut alors être réalisée à partir d'un moteur synchrone
à deux sens de rotation.

Le reste du schéma est le même, sauf à propos du dernier
enroulement additionnel E3.

Celui-ci possède un point milieu P33, et une inductance à
point milieu IPM est branchée entre ce point milieu P33 et
l'inverseur commandé I3 qui va soit à la borne extrême P31,
soit à la borne extrême P32. La sortie S3 est prise au point
milieu de l'inductance IPM.

Cette variante peut s'appliquer au mode de réalisation de la
figure 1. D'autres variantes sont envisageables : modifier
la figure 2 pour que l'inverseur I3 soit relié à des points
P34 et P36 (comme fig. 1) plutôt que P31 et P32; l'inductance IPM (sans point milieu) peut alors se brancher en
parallèle sur l'une et/ou l'autre des voies de l'inverseur
I3, ou bien entre le point milieu P33 et la ligne S3.

Le circuit de commande des inverseurs CCI des figures 1
ou 2 peut être réalisé avantageusement de la manière décrite
sur la figure 3.

Un amplificateur-comparateur 59 reçoit sur l'une de ses entrées la valeur mesurée définie par l'organe VM, et disponible sous forme d'échantillon analogique. (Un prélèvement convenable des échantillons ou un traitement convenable de ceux-
ci permet de les rendre représentatifs, malgré les variations
périodiques de la tension alternative fournie à la charge L.)
L'autre entrée de l'amplificateur-comparateur 59 reçoit une
valeur de consigne, qui peut être définie par exemple à l'aide d'un potentiomètre.

La sortie de l'amplificateur-comparateur 59 est appliquée à
une première entrée d'une porte ET 61, et, à travers un inverseur logique 60, à une première entrée d'une porte ET 62.
Les secondes entrées des portes ET 61 et 62 reçoivent des
impulsions provenant d'un générateur 63. Ces impulsions
sont engendrées à la fréquence de 100 hertz, avantageusement
en synchronisme des maxima de la tension d'alimentation.
Ces impulsions doivent apparaître entre les instants de
commande requis par les inverseurs commandés (instants qui
correspondent à leur minimum de courant). L'homme de l'art
saura définir le déphasage qui doit alors exister entre les
impulsions du générateur 63 et la tension d'alimentation,
compte tenu des retards intervenant dans les différents
circuits. En variante, le générateur d'impulsions fonctionne
à 50 Hertz. Il peut d'ailleurs fonctionner à d'autres fréquences reliées à celle de l'alimentation, qui dans certains
pays sera à une valeur de 60 Hertz par exemple.

Les sorties des portes ET 61 et 62 sont respectivement appliquées aux entrées de comptage et de décomptage d'un compteur-
décompteur binaire à quatre bits 64. Les sorties d'étages
Q1 à Q4 de ce compteur-décompteur binaire sont à leur tour
appliquées, de préférence, à un transcodeur 65. Ce dernier"

fournit la ligne de référence, ainsi que les signaux A, B, C, D et leurs compléments logiques, dont on a vu précédemment qu'ils étaient appliqués respectivement aux commandes d'inverseurs ICO, IC1, IC2 et IC3.

La figure 4 montre l'état des sorties Q1 à Q4 du compteur-décompteur binaire 64 pour 16 échelons consécutifs de variation de tension, échelons qui sont notés de 0 à 15. La même figure 4 montre les états des sorties A, B, C, D du transcodeur 65, pour les mêmes échelons.

On note que, pour chaque incrémentation ou décrémentation du comptage d'échelons, seul l'un des signaux A, B, C, D change d'état. Ceci est obtenu par usage d'un code tel que le code Gray.

L'homme de l'art saura réaliser le transcodeur 65, étant observé que dans l'exemple illustré où le compteur 64 possède quatre bits, le signal A est directement défini par le signal Q4, tandis que chacun des autres signaux est défini par le OU EXCLUSIF du poids correspondant en sortie du compteur 64 avec le poids immédiatement supérieur. Par exemple, B est le OU EXCLUSIF de Q3 et Q4. Enfin, on sait réaliser une fonction OU EXLCUSIF, notamment par des combinaisons de portes ET et OU.

En variante, le code Gray peut être directement obtenu par un codeur optique ou mécanique, tournant ou non.

Le mode de réalisation décrit utilise un compteur-décompteur binaire 64, qui possède seize états différents. Il faudra donc au plus parcourir les seize états du compteur pour obtenir un code désiré, et une valeur désirée de la tension d'alimentation de la charge L. Pour un générateur 63 fonctionnant à 100 Hertz, 160 millisecondes seront donc nécessaires. Il s'agit là déjà d'un fonctionnement rapide.

Pour obtenir plus de rapidité, on peut utiliser quatre registres à la place du compteur 64, et envoyer une impulsion successivement à chacun de ces registres, afin d'obtenir le
code désiré. Le temps nécessaire est alors en principe de
40 millisecondes au maximum.

Une autre variante encore plus rapide consiste à envoyer
les quatre impulsions simultanément dans les dix millisecondes pour obtenir immédiatement le code désiré. Dans cette
variante, l'organe 59 est remplacé par un amplificateur proportionnel, suivi par exemple d'un convertisseur analogiquenumérique, qui donne immédiatement les poids binaires qu'il
y a lieu d'appliquer aux quatre registres en parallèle.

La présente invention est susceptible de différentes applications. Elle permet tout d'abord, comme le montrent les
exemples décrits, d'ajuster à une valeur désirée la tension
appliquée à une charge L, à l'intérieur d'une gamme prédéterminée.

Cette charge peut être constituée notamment de lampes
d'éclairage public, lampes à vapeur de mercure ou à vapeur
de sodium.

L'invention permet aussi la réalisation d'un générateur de
tension à enveloppe rectangulaire, dont la fréquence de l'enveloppe est au plus celle de l'alimentation et dont l'amplitude peut être choisie au moyen des inverseurs commandés.

Par ailleurs, dans ce qui précède, on a considéré que les
points P1 et P2, auxquels est relié l'inverseur commandé de
base IO sont les extrémités de l'enroulement de base EB. Il
est bien entendu possible de prendre, pour certaines applications, une partie seulement de cet enroulement de base EB,
située soit du côté de l'alimentation "phase", soit du côté
de l'alimentation "neutre", soit même de façon intermédiaire
dans l'enroulement de base EB. En ce cas, la tension nominale U demeure comptée entre les points P1 et P2 ainsi modifiés.

A cet égard, une variante intéressante peut consister à diviser l'enroulement de base en trois parties égales (en tension). Le premier enroulement additionnel vient se brancher, par commutation à l'une de ces trois parties. Il est à son tour divisé en trois parties, et ainsi de suite. On réalise ainsi un dispositif à commande numérique, de structure ternaire. A cet égard, dans la description détaillée ci-dessus, les mots "bornes extrêmes" d'un enroulement peuvent viser en fait des bornes non situées à l'extrémité physique de cet enroulement.

Des solutions mixtes peuvent ainsi être envisagées :
- mixité binaire-ternaire;
- mixité entre interrupteurs électroniques et électromécaniques.

On décrira maintenant d'autres variantes intéressantes de l'invention.

La figure 5 reprend les éléments de la figure 1 (ou 2), en illustrant sous forme d'un bloc le dernier étage (DCS) de ce que l'on a appelé jusqu'à présent le circuit de sortie. Comme précédemment,des triacs que comprend cet étage DCS sont commandés par des organes IC3, sous le contrôle du circuit CCI. Les organes IC3 et leur commande CCI sont réalisables pour l'homme de l'art sur la base des enseignements de la présente description.

Sur les figures 5A et 5B, l'enroulement E3 de l'étage DCS est branché comme précédemment entre les points S2 et P23 de l'étage précédent. Entre ses points extrêmes P301 et P308, l'enroulement E3 comporte six points intermédiaires P302 à P307, régulièrement répartis.

L'étage DCS comporte encore, sur un circuit magnétique commun NM, huit enroulements V1 à V8, plus un enroulement auxiliaire V0.

Sur la figure 5A, des triacs D1 à D8 sont montés respectivement entre les points P301 à P308 et des extrémités de signe opposé (compte tenu du sens d'enroulement) des enroulements V1 à V8. Deux à deux, ceux-ci sont interconnectés, par exemple V1 avec V2, V3 avec V4, pour former la ligne de sortie S3 vers la charge L.

Dans la variante préférentielle de la figure 5B, lesdites extrémités des enroulements V1 à V8 sont reliées directement aux points P301 à P308. Les triacs tels D1A, D2A, sont maintenant prévus entre les points de sortie des enroulements, tels V1, V2, et la ligne de sortie S3.

Un seul des triacs, D1 à D8, ou D1A à D8A, est rendu conducteur à la fois. Ceci permet un ajustement fin de la tension appliquée à la charge L.

Lors d'une commutation entre triacs, par exemple D1 et D2, le couplage des enroulements V1 et V2 associés facilite l'obtention d'une bonne commutation, compte tenu du déphasage tension/courant existant sur les charges autres que purement résistives.

L'enroulement auxiliaire V0 délivre une tension qui est amplifiée et écrêtée de façon à obtenir des transitions en synchronisme avec les extremums de courant dans la charge.

Ces transitions sont appliquées à un circuit monostable ou équivalent produisant un retard de 4,9 millisecondes par exemple (un peu moins d'un quart de période à 50 Hz).

On dispose alors d'un signal bien précis pour commander la commutation des triacs (telle que requise en vertu de la mesure du circuit VM), juste avant que ne se fassent les passages par zéro du courant dans la charge L.

Ce montage assure la commutation satisfaisante des triacs sans risque de surintensité excessive, par conséquent sans surdimensionner ceux-ci et/ou sans être obligé d'attendre une alternance entre la fermeture d'un triac et l'ouverture de l'autre.

La commutation peut ainsi se faire aisément à chaque alternance.

Le montage de la figure 5 permet d'obtenir :

- 8 pas pour les enroulements EB, E1, E2,

- multipliés par 7 pour l'enroulement E3,

- plus un pas (la dernière position de l'enroulement).

Cela donne 57 pas avec 4 enroulements de puissance et 14 triacs.

Pour arriver au même résultat (ce qui implique 64 pas), le montage de la figure 1 aurait six enroulements de puissance et douze triacs. La réalisation de la figure 5 est manifestement plus avantageuse.

Le côté préférentiel de la figure 5B tient à ce que
les anodes 1 des huit triacs sont au potentiel commun de
la sortie S3, ce qui permet de réaliser la commande de
leurs gachettes avec une alimentation unique.

0157689

Revendications.

1. Générateur de tension alternative variable,

du type comprenant un enroulement de base, auto-transformateur (EB),qui reçoit une tension alternative d'entrée, et dont le circuit de sortie (SO), associé à des moyens de commande (CCI), fournit à une charge (L) une tension d'alimentation réglable,

caractérisé en ce que le circuit de sortie est relié d'une part en un point intermédiaire (P3) de l'enroulement de base, et d'autre part, par un organe inverseur (IO) à l'une ou l'autre des bornes extrêmes de l'enroulement de base (EB), et en ce que les moyens de commande (CCI) sont agencés pour fournir un signal numérique binaire de commande à cet organe inverseur (IO), ladite commande étant exécutée à l'inversion du courant traversant l'organe inverseur (IO).

2. Générateur selon la revendication 1, caractérisé en ce que le circuit de sortie comporte :

- un premier enroulement additionnel (E1), branché d'une part au point intermédiaire (P3) de l'enroulement de base, et d'autre part, par ledit organe inverseur, à l'une ou l'autre des bornes extrêmes (P1, P2) de l'enroulement de base, et

- un premier organe inverseur additionnel (I1), branché sur une partie au moins du premier enroulement additionnel, la sortie (S1) de ce premier organe inverseur additionnel (I1) allant vers la charge (L).

3. Générateur selon la revendication 2, caractérisé en ce que le circuit de sortie comporte :

- un ou plusieurs autres enroulements additionnels (E2, E3),

0157689

branchés chacun d'une part en un point intermédiaire de l'enroulement précédent, et d'autre part, par l'organe inverseur de celui-ci, à l'une ou l'autre des bornes extrêmes de l'enroulement précédent,

- chaque enroulement additionnel étant associé à au moins un inverseur additionnel correspondant (I2, I3), et la sortie du dernier de ces inverseurs additionnels allant vers la charge.

4. Générateur de tension alternative selon la revendication 3, caractérisé en ce qu'il comprend au moins deux autres enroulements additionnels.

5. Générateur de tension alternative selon l'une des revendications 1 à 4, caractérisé en ce que chaque organe inverseur comprend deux triacs (T1, T2), ou deux paires de thyristors.

6. Générateur selon la revendication 5, caractérisé en ce que, pour l'un au moins des organes inverseurs, la gâchette de chaque triac (T1, T2) est commandée par un circuit d'actionnement (ICO) relié à l'extrémité libre de l'enroulement concerné qui se trouve connectée à l'autre triac.

7. Générateur selon la revendication 6, caractérisé en ce que le circuit d'actionnement (ICO) comprend la partie menée d'un organe opto-électronique du genre opto-triac.

8. Générateur selon l'une des revendications 5 à 7, caractérisé en ce que le dernier enroulement additionnel (E3) possède deux points de branchement intermédiaires (P34, P36) situés au quart et aux trois quarts de sa longueur, un dernier organe inverseur à deux triacs (I3) étant branché entre ces deux points intermédiaires, et la charge étant branchée entre le point commun des deux triacs et l'une des bornes de l'enroulement de base.

9. Générateur selon l'une des revendications 1 à 4, caractérisé en ce que chaque organe inverseur comprend un inverseur mécanique (IO, I1, I2, I3) à commande par signal codé.

10. Générateur selon la revendication 9, caractérisé en ce qu'une inductance à point milieu (IPM) est reliée d'une part au point milieu (P33) du dernier enroulement additionnel, et d'autre part, par un dernier inverseur mécanique (I3) à commande codée, à l'une des bornes extrêmes de l'enroulement précédent, la charge (L) étant branchée entre le point milieu de l'inductance (IPM) et l'une des bornes de l'enroulement de base.

11. Générateur selon l'une des revendications précédentes, caractérisé en ce que les moyens de commande comprennent des moyens (59) pour comparer à une tension de consigne la tension mesurée aux bornes de la charge, et des moyens pour élaborer et mémoriser (60 à 64) un signal binaire en fonction de cette comparaison, afin de l'appliquer aux organes inverseurs dans l'ordre des poids binaires associés.

12. Générateur selon la revendication 11, caractérisé en ce que le signal binaire change d'un incrément à la fois.

13. Générateur selon la revendication 12, caractérisé en ce que le signal binaire est appliqué (65) aux inverseurs commandés dans un code, tel que le code Gray, où un seul bit change à chaque incrémentation/décrémentation.

14. Générateur selon l'une des revendications 11 à 13, caractérisé en ce que les moyens de commande comprennent un amplificateur-comparateur (59) de la valeur mesurée à une valeur de consigne; une source d'impulsions (63) à une fréquence reliée à celle de la tension alternative d'entrée, un compteur-décompteur binaire (64) et des moyens (60-62) pour appliquer chaque impulsion de la source au compteur, en comptage ou décomptage suivant le signe de la sortie de l'amplificateur-comparateur.

15. Générateur selon l'une des revendications 1 à 7 et 9 à 14, caractérisé en ce que le dernier étage du circuit de sortie comprend un enroulement (E3) à prises (P301-P308) associé à un nombre d'enroulements de sortie, égal à celui des prises (V1-V8), ces enroulements de sortie étant montés sur un même circuit magnétique (NM), et des moyens de commutation (D1-D8; DA1-DA8) montés pour connecter ces enroulements, en sens alternés à l'égard du circuit magnétique, à un point commun (S3) allant vers la charge (L).

16. Générateur selon la revendication 15, caractérisé en ce que les moyens de commutation sont des triacs (D1-D8) montés entre les prises et les enroulements de sortie.

17. Générateur selon la revendication 15, caractérisé en ce que les moyens de commutation sont des triacs (DA1-DA8) montés entre les enroulements de sortie et le point commun.

18. Générateur selon l'une des revendications 15 à 17, caractérisé par un enroulement auxiliaire (VO) monté sur le même circuit magnétique que les enroulements de sortie (V1-V8), enroulement auxiliaire dont le signal sert à la commande des moyens de commutation.

FIG.1

CONSIGNE

MESURE
(DE VM)

FIG. 3

AMP.
COMP.
59

60

63

GENERATEUR
D'IMPULSIONS
( 50 ou 100 Hz)

61

62

+

−

64

COMPTEUR _DECOMPTEUR
BINAIRE

(4 BITS)

Q1      Q2      Q3      Q4

65

TRANCODEUR

A   Ā   B   B̄   C   C̄   D   D̄

FIG.4

| Q4 | Q3 | Q2 | Q1 | | A | B | C | D | |
|----|----|----|----|--|---|---|---|---|--|
| 0 | 0 | 0 | 0 | | 0 | 0 | 0 | 0 | 0 |

2/6

0157689

FIG.2

FIG.5

0157689    4 / 6

FIG. 5A

FIG.5B

Vers circuit de commande CCI

Vers circuit de commande CCI

Vers P2

6 / 6

0157689

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 004 462 (GOULD COMPONENTS)<br>* Page 3, ligne 5 - page 4, ligne 9; page 15, lignes 30-34 *<br><br>--- | 1,5 | G 05 F    1/20<br>H 02 M    5/10 |
| A | US-A-3 818 321 (WILLNER et al.)<br>* Colonne 2, lignes 26-57; colonne 3, lignes 47-65 *<br><br>----- | 1 | |

**DOMAINES TECHNIQUES RECHERCHES (Int. Cl.4)**

H 02 M
G 05 F
H 02 P

Le présent rapport de recherche a été établi pour toutes les revendications

| Lieu de la recherche<br>LA HAYE | Date d'achèvement de la recherche<br>14-06-1985 | Examinateur<br>KERN H. |
|---|---|---|

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82